# EUROPÄISCHE PATENTANMELDUNG

(11) **EP 0 849 943 A1**
(43) Veröffentlichungstag der Anmeldung: **24.06.1998**
(21) Anmeldenummer: 97115756.5
(22) Anmeldetag: 10.09.1997
(51) Int. Cl.: H04N 5/44, H04N 7/173

(54) **Interaktive Fernbedienung für Empfänger für digitale TV-Signale**

(30) Priorität: 18.12.1996 DE 19652800
(71) Anmelder: SIEMENS AKTIENGESELLSCHAFT, 80333 München (DE)
(72) Erfinder: Carlsen, Niels-Vejrup, Dr., 81669 München (DE); Bock, Gerhard, 81379 München (DE); Maasss, Joachim, 80339 München (DE)

(57) **Zusammenfassung**

Die Erfindung betrifft ein Verfahren zur interaktiven Fernbedienung eines Empfängers (STB) für digitale TV-Signale, bei dem Daten (B) zur Darstellung einer Oberfläche vom Empfänger (STB) zur Verfügung gestellt werden, und bei dem Daten (R) für eine Rückmeldung von einem Fernbedienungsgerät (FG) zum Empfänger (STB) übertragen werden. Erfindungsgemäß werden die Daten (B) zur Darstellung der Oberfläche zum Fernbedienungsgerät (FG) übertragen und auf einer Anzeigeeinrichtung (AE) dargestellt.

## Beschreibung

Die Erfindung betrifft ein Verfahren zur interaktiven Fernbedienung eines Empfängers (STB) für digitale TV-Signale gemäß dem Oberbegriff des Patentanspruches 1, einen Empfänger für digitale TV-Signale gemäß dem Oberbegriff des Patentanspruches 2, und ein Fernbedienungsgerät für einen Empfänger für digitale TV-Signale gemäß dem Oberbegriff des Patentanspruches 4.

Ein solcher Empfänger, der meist als Set-Top-Box bezeichnet wird, wird vorzugsweise in einer Multimedia-Landschaft zum Empfang von digitalen TV-Signalen verwendet. Die Set-Top-Box weist zur interaktiven Benutzung einen Rückkanal auf, der über eine Telefonanschlußleitung mit einem analogen oder digitalen Telefonnetz verbunden ist. Über diesen Rückkanal werden Daten für eine interaktive Rückmeldung, beispielsweise zur Sendeanstalt, übertragen. Auf Grund dieser Rückmeldedaten wird die zur Verfügung gestellte und ausgewählte Funktion über die Set-Top-Box am Bildschirm des angeschlossenen TV-Empfängers dargestellt.

Der Bildschirm des TV-Gerätes ist nicht gut geeignet zur Darstellung von größeren Textfeldern und/oder Bildern mit grafischen Details. Auch durch den relativ großen Abstand zum Bildschirm ist die darstellbare Informationsmenge beschränkt. Weiter ist eine übliche Fernbedienung für ein Fernsehgerät oder eine Set-Top-Box zur Eingabe von standardisierten Kommandos und Kanalnummern ausgebildet, und nur eingeschränkt für eine Texteingabe oder das Ausfüllen von Formularen sowie das Schreiben einer elektronischen Post geeignet.

Diese Problem wird in der Zukunft noch durch die Vielzahl der zur Verfügung gestellten TV-Kanäle und den elektronischen Programmführer vergrößert, da hierbei eine sehr große, komplexe Informationsmenge auf dem Bildschirm dargestellt werden muß. Weiter kann in Zukunft durch das Angebot von Online-Diensten die interaktive Bedienung der Set-Top-Box die Benutzung einer elektronischen Post notwendig machen. Die Online-Dienste, zum Beispiel Internet, erfordern weiterhin die Darstellung einer komplexen Information auf dem Bildschirm.

Der Erfindung liegt die Aufgabe zugrunde, die Handhabung eines Empfängers für digitale TV-Signale, insbesondere die interaktive Bedienung, zu vereinfachen.

Diese Aufgabe wird erfindungsgemäß für ein Verfahren gemäß den Merkmalen des Patentanspruchs 1, für einen Empfänger gemäß den Merkmalen des Patentanspruchs 2, und für ein Fernbedienungsgerät gemäß den Merkmalen des Patentanspruchs 4 gelöst.

Bei einer vorteilhaften Weiterbildung des Fernbedienungsgerätes sind programmierbare Tasten beziehungsweise Tastenfelder vorgesehen.

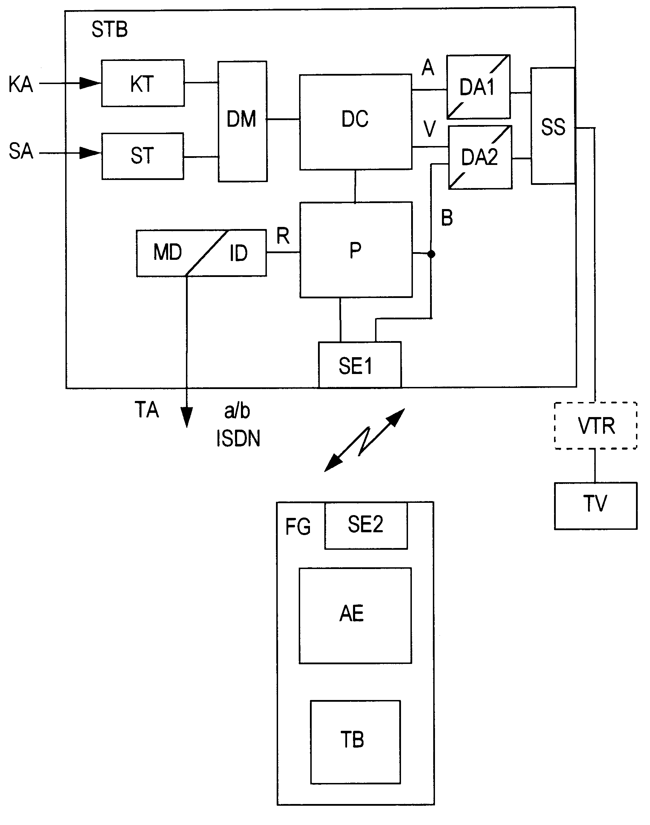

Im Folgenden wird die Erfindung anhand eines in der Zeichnung dargestellten Ausführungsbeispieles beschrieben.

In der einzigen Figur ist ein Empfänger STB für digitale TV-Signale dargestellt, eine sogenannte Set-Top-Box. Der Empfänger STB weist einen Kabelanschluß KA und einen Anschluß für eine Satellitenantenne SA auf. Der Kabelanschluß KA ist an einem Kabeltuner KT angeschaltet, und der Anschluß für eine Satellitenantenne SA an einem Satellitentuner ST. Die in den Tunern KT und ST empfangenen digitalen TV-Signale werden einem Demodulator DM zugeführt, dessen Ausgangssignale an einem MPEG-Decoder DC anliegen. Im Decoder DC werden digitale Audio- und Videodaten A, V gewonnen, die jeweils über einen Digital-Analogwandler DA1 bzw. DA2 an eine Schnittstelle SS gegeben werden. Diese Schnittstelle SS kann beispielsweise durch einen Scartanschluß realisiert sein. Die jetzt analogen TV-Signale werden von der Schnittstelle SS direkt, oder indirekt über einen Videorecorder VTR, einem Fernseher TV zugeführt.

Der MPEG-Decoder DC ist mit einem Mikroprozessor P verbunden. Im Mikroprozessor P, der auch durch einen digitalen Signalprozessor realisiert sein kann, werden aus den dekodierten, digitalen TV-Signalen Daten B für eine Bedienoberfläche gewonnen. Diese Daten B werden, ebenso wie die Videodaten V, über den Digital-Analogwandler DA2 und die Schnittstelle SS letztlich auf dem Bildschirm des Fernsehers TV als Bedienoberfläche dargestellt.

Der Benutzer kann, beispielsweise menügeführt, mit Hilfe der auf dem Bildschirm dargestellten Bedienoberfläche reagieren, und Rückmeldungen an dem Empfänger STB geben. Der Empfänger STB weist hierzu beispielsweise einen drahtlose Empfangseinrichtung (SE1) auf, die ebenfalls mit dem Mikroprozessor P verbunden ist.

Die über die Empfangseinrichtung (SE1) eingegangenen Rückmeldungen werden im Mikroprozessor P in Daten R für einen Rückkanal umgewandelt. Diese Daten R werden beispielsweise über ein Modem MD an ein analoges Telefonnetz, oder über eine ISDN-Schnittstelle ID an ein digitales Telefonnetz gegeben. Das Modem MD beziehungsweise die ISDN-Schnittstelle ID ist hierzu an einem Telefonanschluß TA angeschaltet.

Erfindungsgemäß weist der Empfänger STB für digitale TV-Signale eine weitere Schnittstelle auf, über die die Daten B zur Darstellung einer Bedienoberfläche beispielsweise an ein Fernbedienungsgerät FG gegeben werden. Die Daten B zur Darstellung einer Bedienoberfläche sind allgemein zu verstehen, und können auch Daten zur Darstellung einer Oberfläche von Online-Diensten oder zur Darstellung einer Oberfläche einer elektronischen Post sein. Die Daten B sind vorzugsweise Daten durch die eine grafisch und/oder bildlich gestaltete Oberfläche, bedarfsweise ergänzt mit alphanumerischen Zeichen, dargestellt wird.

Die Verbindung zwischen Empfänger STB und Fernbedienungsgerät FG ist vorzugsweise drahtlos ausgebildet, beispielsweise durch eine Infrarot- oder eine HF-Verbindung.

Die weitere Schnittstelle ist in vorteilhafter Weise eine Sende-Empfangseinrichtung SE1, von deren Sendeteil die Daten B zur Darstellung einer Bedienoberfläche abgegeben, und von deren Empfangsteil die Rückmeldungen empfangen werden.

Ein erfindungsgemäß ausgebildetes Fernbedienungsgerät FG weist eine Anzeigeeinrichtung AE auf, auf der die durch die Daten B vorgegebene Bedienoberfläche dargestellt wird. Daneben weist das Fernbedienungsgerät FG eine Sende-Empfangseinrichtung SE2 und in an sich bekannter Weise einen Tastenblock TB auf. Die Sende-Empfangseinrichtung SE2 dient zum Empfang der Daten B und zusammen mit dem Tastenblock TB zur Abgabe der Rückmeldung an den Empfänger STB, das heißt letztlich zur Abgabe der Daten R für den Rückkanal.

Insbesondere bei einer vergleichsweise großen und/oder hochauflösenden Anzeigeeinrichtung AE im Fernbedienungsgerät FG, kann der elektronische Programmführer sowie Online-Dienste und elektronische Post problemlos an Stelle oder auch zusätzlich zur Darstellung auf dem TV-Bildschirm auf der Anzeigeeinrichtung AE wiedergegeben werden. Die Schriftgröße von Texten, elektronischen Symbole wie Icons und andere Steuerzeichen können kleiner sein.

Bei einer vorteilhaften Weiterbildung der Anzeigeeinrichtung AE im Fernbedienungsgerät FG können zumindest einige der Tasten des Tastenblockes TB dynamisch über die Bedienoberfläche programmiert werden. Auf Grund der Daten B für die Bedienoberfläche wird diesen Tasten eine vorbestimmte Funktion zugewiesen. Die Funktion ist beispielsweise an das dargestellte Menü gekoppelt. Hierdurch wird die Bedienung für den Benutzer weiter vereinfacht. Neben diesen programmierbaren Tasten kann der Tastenblock TB alphanumerische Tasten aufweisen, die insbesondere zur Eingabe einer e-mail dienen.

An Stelle der Tasten beziehungsweise des Tastenblockes TB kann das Fernbedienungsgerät FG Tastenfelder aufweisen, die durch Berührung mit dem Finger oder mit einem Griffel aktiviert werden.

## Patentansprüche

1. Verfahren zur interaktiven Fernbedienung eines Empfängers (STB) für digitale TV-Signale,
bei dem Daten (B) zur Darstellung einer Oberfläche vom Empfänger (STB) zur Verfügung gestellt werden, und
bei dem Daten (R) für eine Rückmeldung von einem Fernbedienungsgerät (FG) zum Empfänger (STB) übertragen werden,
dadurch gekennzeichnet, daß
die Daten (B) zur Darstellung der Oberfläche zum Fernbedienungsgerät (FG) übertragen und auf einer Anzeigeeinrichtung (AE) dargestellt werden.

2. Empfänger (STB) für digitale TV-Signale
mit Mitteln zur Gewinnung von Audio- und Videodaten (A, V) und von Daten (B) zur Darstellung einer Oberfläche, die alle an einer Schnittstelle (SS) abgreifbar sind,
dadurch gekennzeichnet, daß
eine weitere Schnittstelle (SE1) zur Abgabe der Daten (B) vorgesehen ist.

3. Empfänger (STB) nach Anspruch 2,
dadurch gekennzeichnet, daß
die weitere Schnittstelle (SE1) zum Empfang von Daten (R) für eine Rückmeldung ausgebildet ist.

4. Fernbedienungsgerät (FG) für einen Empfänger (STB) für digitale TV-Signale,
gekennzeichnet durch
Mittel für den Empfang und die Anzeige (SE2, AE) der Daten (B) zur Darstellung einer Bedienoberfläche.

5. Fernbedienungsgerät (FG) nach Anspruch 4,
gekennzeichnet durch
dynamisch, über die Daten (B) zur Darstellung der Oberfläche, programmierbare Tasten beziehungsweise Tastenfelder.

6. Fernbedienungsgerät (FG) nach Anspruch 4 oder 5,
gekennzeichnet durch
alphanumerische Tasten oder Tastenfelder.
